**Europäisches Patentamt**

**European Patent Office**

**Office européen des brevets**

(11) Publication number: **0 174 675**
**B1**

(12) **EUROPEAN PATENT SPECIFICATION**

(45) Date of publication of patent specification: **31.05.89**

(51) Int. Cl.⁴: **C 09 J 3/14,** C 08 F 220/00, C 08 F 283/06

(21) Application number: **85201276.4**

(22) Date of filing: **06.08.85**

(54) Anaerobic resin composition.

(30) Priority: **10.08.84 NL 8402482**

(43) Date of publication of application:
**19.03.86 Bulletin 86/12**

(45) Publication of the grant of the patent:
**31.05.89 Bulletin 89/22**

(84) Designated Contracting States:
**BE CH DE FR GB IT LI LU NL SE**

(56) References cited:
**DE-A-1 900 126**
**DE-A-2 544 901**
**DE-A-2 610 563**
**DE-A-2 649 080**

(73) Proprietor: **BEMAG CHEMIE B.V.**
**Oudegoedstraat 60**
**Deventer (NL)**

(72) Inventor: **Den Braber, Antonie Arie**
**Veldstraat 42**
**Putten (NL)**

(74) Representative: **Elzas, Salomon, Drs. et al**
**Octrooibureau Polak & Charlouis Laan Copes**
**van Cattenburch 80**
**NL-2585 GD The Hague (NL)**

Courier Press, Leamington Spa, England.

**Description**

This invention relates to an anaerobically curing resin composition (hereinafter called as usual "anaerobic resin composition" for the sake of brevity), containing one or more monomeric methacrylates, one or more curing catalysts and accelerators and, if desired, further usual additives.

Such compositions are known from many patents and they are also commercial products. An important use of this kind of compositions is the sealing of screws and bolts. The composition which initially is in contact with the air and is liquid, is excluded from the air by turning the screw and is then cured.

As monomers in this kind of compositions usually di- and/or triacrylates and/or methacrylates are used. Up till now, mono-(meth)acrylates were only then considered useful, if the ester residue contained an active hydrogen atom.

Examples of such mixtures are found for example in Dutch patent 167703.

Simple methacrylic esters of monovalent alcohols could be used as additives in such compositions if desired, but not as the main monomer. Compositions containing exclusively or predominantly such a monomer, cannot be cured anaerobically in the desired way.

It has now been found that such esters indeed can be used, provided one uses in combination therewith a compound containing at least 3 oxyethylene groups in the molecule. Surprisingly this enables to use simple methacrylates for the present purpose, which never has been possible since the beginning of the development of these anaerobically curing compositions.

It is known per se from DE—A—1,900,126 to prepare non-fluid anaerobic resin compositions by incorporating therein a high polymer which is insoluble in the mixture of monomers and initiators and is solid at ambient temperatures and slightly above. Suitable polymers of this type are a.o. polyethylene glycols. However, it is explicitly stated on page 6 of this publication that the acrylate monomer should be a di- or polyacrylate ester or a mono-acrylate ester having reactive groups in the alcohol residue, i.e. a usual monomer of the state of the art.

In the compositions of the present invention the ratio of the methacrylate to the compound having at least 3 oxyethylene groups can vary within wide limits, but in practice it is preferably 2:1 to 1:2.

The oxyethylene compounds used according to the present invention possess surfactant activity and this entails a further advantage over the conventional anaerobically curing compositions. For the present compositions possess a lower sensitivity for impurities on the metal and thus for instance, when the curing rate is tested with new bolts received from the factory, it appears that, whether these bolts are first defatted or not, this rate remains the same. This is true for both the curing rate and the final strength attained.

As oxyethylene derivatives non-ionic or anionic derivatives can be used. Thus, one can use simple polyethylene glycol ethers or also copolymers of ethylene oxide and propylene oxide, and with particular advantage one can use polyether carboxylic acids which possess a particularly good defatting action.

As has been stated already, usually various components are present in anaerobically curing compositions. Some thereof should always be used, such as a catalyst and an accelerator, and others serve to give the compositions certain further desirable properties.

In the present case the monomer, as mentioned already, is a simple monomethacrylate. The alcohol residue of the ester can be a straight or branched aliphatic group, a cycloaliphatic group or an aromatic group, and may also contain functional groups, such as terminal hydroxy groups, epoxy groups, unsaturated bonds, sulphide groups, polyether groups, nitrogen-containing groups and silicon-containing groups.

The catalyst used is in general of the peroxide type. Usually a hydroperoxide is used, for instance cumene hydroperoxide or t.butylhydroperoxide. In general all peroxides are suitable which yield a reasonably rapid curing without shortening the shelf life too much. In general amounts of about 1—5% of peroxide catalyst are used. Also other per compounds can be used, for instance 2-butylperbenzoate, but such compounds preferably are used in combination with hydroperoxides as co-initiators.

Accelerators are also usual ingredients of this kind of compositions. For this purpose often sulphimides are used, such as saccharine and also imides, such as phthalimide, maleimide, succinimide, formamide and derivatives thereof. Furthermore, also substances are used like hydantoin and aminotriazole. Generally, compounds having a N—H group are used as accelerators, wherein the H possesses a somewhat acidic character. Also amines are added as latent polymerization accelerators. Preferably tertiary amines are used, e.g. triethylamine or tributylamine and even more particularly aliphatic-aromatic tertiary amines, such as N,N-dialkylaryl amines, e.g. N,N-dimethyl-p-toluidine. These amines are generally used in amounts of 0.1—10%, preferably 1—2%.

Suitable accelerator combinations are also salts or complexes of the above-mentioned sulphimides or imides with the above-mentioned tertiary amines. These complexes are prepared by dissolving the sulphimides or imides in a low-boiling polar organic solvent and then adding the stoichiometric amount of amine and evaporating the solvent. An advantage of such a complex is that on storing the composition, the curing velocity decreases less without other properties being affected in an unfavourable way.

On the other hand, often a polymerization inhibitor is added as a stabilizer for the compositions, in order to prolong the shelf life. Usually compounds having a quinone-like structure are used for this purpose, for instance naphtoquinone, benzoquinone and their derivatives.

EP 0 174 675 B1

Sometimes it is not possible to obtain a good shelf life with only inhibitors of the quinone type. In that case also one or more anti-oxidants are added, such as substituted phenols, hydroquinone, catechol and derivatives thereof. Also substances from the groups of phosphites and phosphines are suitable.

Because the raw materials of the composition sometimes may be contaminated with spores of transition metals which may promote a premature polymeriation, it is desirable to remove these as far as possible. To this end one can use chelating agents, such as EDTA and its salts, but also tartaric acid, citric acid and their salts. Particularly suitable are combinations of EDTA with tartaric acid or citric acid, respectively, because they show a synergistic effect. Another possibility is a previous purification of the raw materials with the aid of insoluble resins which can remove the concerning metal ions, such as some ion exchangers, while also a copolymer of methyl-vinyl ether and maleic acid (commercial product Gantrez S 95) is suitable. As compared with the use of chelating agents this method has the advantage that the metals are completely removed previously and accordingly are not present at all in the final composition.

In the anaerobically curing compositions often also plasticizers are incorporated, in order to adapt the compositions to the desired final strength. All known plasticizers can be used, provided they are compatible with the other components of the system and do not exert a negative influence on the curing rate, storage stability or the like. As suitable plasticizers can be mentioned: esters of dicarboxylic acids and also linear saturated polyesters and polyethers. Particularly interesting is the use of polyethers and polyether alcohols which are soluble in the system. Surprisingly, these substances appear to have a favourable influence on the curing, whereby the curing occurs more quickly. Also the influence of the metal surface on the curing decreases so that the product becomes anaerobic to a stronger degree. Furthermore, the use of these polyethers and polyether alcohols broadens the choice of the monomers which can be used.

Another possible component is constituted by thickening agents. These may be either of organic or of inorganic nature. All usual thickening agents can be used, provided they are compatible with the other components and provided they do not have a negative influence on the curing rate and the storage stability. As suitable thickening agents may be mentioned saturated and unsaturated polyesters, hydrocarbon resins, polyacrylates, polymethacrylates and their copolymers with each other, as well as their copolymers with styrene, and polystyrene. The thickening agents may have a linear nature, but they may also possess some cross-linking.

As inorganic thickening agents can be mentioned silicates of the mica-type, bentonite, glass fibers, plastic fibers, glass beads etc.

Sometimes it is desirable to confer thixotropic properties to a product, whereby there is a low viscosity when it is applied, whereas there is a high viscosity when the product is in rest after having been applied; this makes it possible to work on vertical planes without the risk of dripping. Suitable agents for rendering the composition thixotropic are for instance fumed silica's (e.g. the commercial products aerosil, cab-o-sil). Also certain amides are suitable.

If desired, colouring agents may also be added, of course provided they do not have an unfavourable influence on the rest of the system.

In anaerobically curing compositions sometimes also mercaptans are used in combination with a peroxide and an accelerator, like saccharin. It has appeared that the addition of 0.1—1,0% of mercaptan to a system containing a peroxide, saccharin and amine gives a particularly rapid curing while still permitting a reasonable storage stability. Practically all mercaptans can be used. A highly suitable mercaptan is dodecyl mercaptan, because this is hardly perceptable in the system. For the rest it is a disadvantage of the mercaptans that the curing acceleration decreases rather rapidly with time during storage so that this acceleration has vanished after a storage time of 6 to 12 months. Therefore, the use of mercaptans is mainly of interest for products which are processed after a short time.

The following comparative experiments further illustrate the invention.

A number of base compositions were prepared according to the following recipe:

| | |
|---|---|
| Monomer, or combination of monomer with oxyethylene derivative, respectively | 100 g |
| Cumene hydroperoxide | 1.5 g |
| Saccharin | 0.3 g |
| N,N-dimethyl-p-toluidine | 0.4 g |
| p-benzoquinone | 0.015 g |
| EDTA tetrasodium salt | 0.015 g |

All compositions were tested at 20°C on M6 bolts and nuts in black colour, both defatted and non-defatted. It was checked whether curing had occurred after 24 hours. The following table indicates the used monomers and ethylene oxide derivatives, as well as the result.

3

| Test | Monomer | Ethylene oxide derivative | Curing after 24 hours |
|---|---|---|---|
| 1 | 100 g methylmethacrylate | − | none |
| 2 | 100 g n-dodecylmethacrylate | − | none |
| 3 | 100 g 2-ethylhexylmethacrylate | − | none |
| 4 | 50 g methylmethacrylate | 50 g propyleneglycol monomethylether | none |
| 5 | 50 g n-dodecylmethacrylate | idem | none |
| 6 | 50 g 2-ethylhexylmethacrylate | idem | none |
| 7 | 50 g methylmethacrylate | 50 g dipropyleneglycol monomethyl ether | none |
| 8 | 50 g n-dodecylmethacrylate | idem | none |
| 9 | 50 g 2-ethylhexylmethacrylate | idem | none |
| 10 | 50 g methylmethacrylate | 50 g ethyleneglycol monobutyl ether | none |
| 11 | 50 g n-dodecylmethacrylate | idem | none |
| 12 | 50 g 2-ethylhexylmethacrylate | idem | none |
| 13 | 50 g methylmethacrylate | 50 g tripropyleneglycol monomethyl ether | complete |
| 14 | 50 g n-dodecylmethacrylate | idem | complete |
| 15 | 50 g 2-ethylhexylmethacrylate | idem | complete |
| 16 | 30 g methylmethacrylate | 70 g laurylpolyglycol ether carboxylic acid (average of 5 ether groups) | complete |
| 17 | 50 g n-dodecylmethacrylate | 50 g laurylpolyglycol ether carboxylic acid (average 5 ether groups) | complete |
| 18 | 70 g 2-ethylhexylmethacrylate | 30 g laurylpolygly-ether carboxylic acid (average 5 ether groups) | complete |
| 19 | 40 g methylmethacrylate | 60 g nonylphenylpolyglycol ether carboxylic acid (average 7 ether groups) | complete |
| 20 | 50 g n-dodecylmethacrylate | 50 g nonylphenylpolyglycol carboxylic acid (average 7 ether groups) | complete |
| 21 | 60 g 2-ethylhexylmethacrylate | 40 g nonylphenylpolyglycol ether carboxylic acid (average 7 ether groups). | complete |

| Test | Monomer | Ethylene oxide derivative | Curing after 24 hours |
|---|---|---|---|
| 22 | 70 g methylmethacrylate | 30 g laurylpolyglycol ether carboxylic acid (average 16 ether groups) | complete |
| 23 | 50 g n-dodecylmethacrylate | 50 g laurylpolyglycol ether carboxylic acid (average 16 ether groups) | complete |
| 24 | 30 g 2-ethylhexylmethacrylate | 70 g laurylpolyglycol ether carboxylic acid (average 16 ether groups) | complete |
| 25 | 40 g methylmethacrylate | 60 g blockcopolymer of ethylene oxide and propylene oxide (average 25 ether groups) | complete |
| 26 | 70 g n-dodecylmethacrylate | 30 g blockcopolymer of ethylene oxide and propylene oxide (average 25 ether groups) | complete |
| 27 | 60 g 2-ethylhexylmethacrylate | 40 g blockcopolymer of ethylene oxide and propylene oxide (average 25 ether groups) | complete |

## Claims

1. Anaerobically curing resin composition, containing one or more monomeric methacrylates, one or more curing catalysts and accelerators, an ethylene oxide derivative and, if desired, further usual additives, characterized by the fact that it contains as the methacrylate an alkyl monomethacrylate in combination with an ethylene oxide derivative containing at least 3 oxyethylene groups.

2. Anaerobically curing resin composition according to claim 1, characterized by the fact that it contains as ethylene oxide derivative a polyether carboxylic acid.

3. Use of a composition according to claim 1 or 2 for sealing bolts, nuts and the like.

## Patentansprüche

1. Anaerob härtende Harzzusammensetzung, enthaltend eines oder mehrere monomere Methacrylate, einen oder mehrere Härtungskatalysatore und Beschleuniger, ein Äthylenoxidderivat und, wenn erwünscht, weitere übliche Zusätze, dadurch gekennzeichnet, dass sie als Methacrylat ein Alkylmonomethacrylat in Kombination mit einem wenigstens 3 Oxyäthylengruppen enthaltenden Äthylenoxidderivat enthält.

2. Anaerob härtende Harzzusammensetzung gemäss Anspruch 1, dadurch gekennzeichnet, dass sie als Äthylenoxidderivat eine Polyäthercarbonsäure enthält.

3. Verwendung einer Zusammensetzung gemäss Anspruch 1 oder 2 für die Versiegelung von Bolzen, Schraubenmutter u.d.

## Revendications

1. Composition de résine durcissant anaérobiquement, contenant un ou plusieurs méthacrylates monomériques, un ou plusieurs catalyseurs et accélérateurs de durcissage, un dérivé de l'oxide d'éthylène et, si désiré, des autres additifs usuels, caractérisé en ce qu'elle contient comme le méthacrylate un mono-méthacrylate d'alcoyle, en combinaison avec un dérivé d'oxyde d'éthylène contenant au moins 3 groupements oxyéthylène.

2. Composition de résine durcissant anaérobiquement selon la revendication 1, caractérisée en ce qu'elle contient comme dérivé d'oxyde d'éthylène un acide polyéther carboxylique.

3. Usage d'une composition selon la revendication 1 ou 2 pour le fixage de chevilles, écrous et pareils.